Europäisches Patentamt

European Patent Office

Office européen des brevets

(19)

(11) **EP 1 030 821 B1**

(12) **EUROPÄISCHE PATENTSCHRIFT**

(45) Veröffentlichungstag und Bekanntmachung des Hinweises auf die Patenterteilung:
**22.08.2001   Patentblatt 2001/34**

(21) Anmeldenummer: **98959813.1**

(22) Anmeldetag: **30.10.1998**

(51) Int Cl.[7]: **C02F 3/12**, C02F 3/30

(86) Internationale Anmeldenummer:
**PCT/EP98/06879**

(87) Internationale Veröffentlichungsnummer:
**WO 99/23038 (14.05.1999 Gazette 1999/19)**

(54) **VERFAHREN ZUR DENITRIFIKATION VON ABWÄSSERN**

METHOD FOR DENITRIFYING WASTE WATER

PROCEDE POUR LA DENITRIFICATION DES EAUX RESIDUAIRES

(84) Benannte Vertragsstaaten:
**AT BE CH DE DK ES FR GB GR IT LI NL SE**
Benannte Erstreckungsstaaten:
**SI**

(30) Priorität: **30.10.1997  DE 19748001**
**24.09.1998  DE 19843967**

(43) Veröffentlichungstag der Anmeldung:
**30.08.2000   Patentblatt 2000/35**

(73) Patentinhaber: **SÜD-CHEMIE AG**
**80333 München (DE)**

(72) Erfinder: **HÖGL, Maximilian**
**D-84034 Landshut (DE)**

(74) Vertreter: **Reitzner, Bruno, Dr.**
**Splanemann Reitzner**
**Baronetzky Westendorp**
**Patentanwälte**
**Rumfordstrasse 7**
**80469 München (DE)**

(56) Entgegenhaltungen:
**EP-A- 0 071 960          DE-A- 4 109 815**
**US-A- 3 994 802          US-A- 4 290 884**

**Beschreibung**

Die Erfindung betrifft ein Verfahren zur Denitrifikation von Abwässern in einer Kläranlage, enthaltend ein Vorklärbecken mit Zulauf, eine biologische Klärstufe und ein Nachklärbecken mit Ablauf.

Bei Kläranlagen bekannter Bauart wird das Rohschlamm enthaltende Abwasser zunächst in ein Vorklärbecken geleitet, wobei dem Vorklärbecken üblicherweise eine Rechenanlage, ein Hebewerk und ein Sandfang vorgeschaltet sind. Im Vorklärbecken findet normalerweise nur eine mechanische Schlammabscheidung statt.

Aus dem Vorklärbecken fließt das Wasser zusammen mit dem nicht abgeschiedenen Teil des Rohschlammes in die biologische Klärstufe, die beispielsweise als Belebungsbecken ausgestaltet sein kann. Hierbei wird das Abwasser mit belebtem Schlamm gemischt und belüftet. Der zum biologischen Abbau erforderliche Sauerstoff wird mit Belüftungseinrichtungen eingetragen. Das Abwasser wird durch die Mikroorganismen des belebten Schlammes gereinigt, wobei die organischen Stoffe des Abwassers aufgenommen und in verschiedenen Anteilen veratmet bzw. in absetzbare Biomasse übergeführt werden. Im Belebungsbecken wird neben der Entfernung der Kohlenstoffverbindungen durch die im belebten Schlamm vorhandenen nitrifizierenden Mikroorganismen (Nitrifikanten) gezielt Ammoniumstickstoff zu Nitratstickstoff oxidiert. Bei der Abwasserreinigung mit Denitrifikation wird zusätzlich Nitrat- und Nitritstickstoff zu gasförmigem Stickstoff reduziert, was entweder im Belebungsbecken oder vorgeschaltet in einen besonderen Denitrifikationsbecken, das auch als Belebungsbecken betrieben werden kann, geschieht.

Von dem Belebungsbecken fließt das Abwasser-Schlamm-Gemisch in das Nachklärbecken, in welchem sich der belebte Schlamm vom gereinigten Abwasser trennt. Der im Nachklärbecken abgesetzte Schlamm wird als Rücklaufschlamm in das Belebungsbecken zurückgeführt, während das gereinigte Abwasser in den Vorfluter abfließt. Da sich der belebte Schlamm bei den biologischen Prozessen vermehrt, wird der Zuwachs als Überschußschlamm entfernt.

Dieser Stand der Technik ist im Arbeitsblatt A 131 vom Februar 1991, Regelwerk Abwasser-Abfall, DK 628356:628.32.001.2 (083) "Bemessung von einstufigen Belebungsanlagen ab 5.000 Einwohnerwerten" näher erläutert.

Nach den gesetzlichen Vorschriften muß der Gesamt-Stickstoffgehalt des in einen Vorfluter eingeleiteten gereinigten Abwassers auf maximal 18 mg/Liter begrenzt werden. Diese Mindestanforderung kann nur durch eine gezielte Stickstoffeliminierung durch Denitrifikation eingehalten werden. Unter Denitrifikation versteht man die biologische Stickstoffeliminierung aus Nitrit ($NO_2$-N) und/oder Nitrat ($NO_3$-N) zu elementarem Stickstoff.

Die gesetzlich vorgeschriebene Denitrifikation konnte bisher nur durch aufwendige Denitrifikationsmaßnahmen erreicht werden.

So mußte im Belebungsbecken ein Denitrifikationsbecken vorgeschaltet werden, in welchem das zufließende Abwasser, Rücklaufschlamm aus dem Nachklärbecken und nitrathaltiges Wasser aus dem Nachklärbecken ohne Sauerstoffeintrag miteinander vermischt wurden, so daß der belebte Schlamm bei anoxischen Bedingungen mit einer Umwälzung ohne Sauerstoffeintrag in Schwebe gehalten werden mußte. Voraussetzung für die vorgeschaltete Denitrifikation war, daß die Rückführung so bemessen war, daß ausreichend Nitratstickstoff zurückgeführt wurde. Wurde die vorgeschaltete Denitrifikation in einem Becken durchgeführt, so war der Einbau von Trennwänden zur Trennung des Belebungsbeckens vom aeroben Nitrifikationsanteil erforderlich.

Bei simultaner Denitrifikation wechseln sauerstoffhaltige Zonen (Nitrifikation) und anoxische Zonen (Denitrifikation) räumlich ohne feste Trennung im Belebungsbecken ab, was eine Vergrößerung der Kapazität des Belebungsbeckens erforderlich machte. Belebungsbecken mit simultaner Denitrifikation wurden vielfach als Umlaufbecken ausgebildet. Die Sauerstoffzufuhr war hierbei dem Sauerstoffverbrauch anzupassen, damit entsprechend große sauerstoffhaltige und sauerstofffreie Zonen entstehen, um die angestrebte Nitrifikation bzw. Denitrifikation zu ereichen, was nur durch eine aufwendige Prozeßkontrolle möglich war.

Bei intermittierender Denitrifikation wechseln Nitrifikation und Denitrifikation in einem einzigen Becken zeitlich ab. Bei alternierender Denitrifikation finden Denitrifikation und Nitrifikation in zwei Becken statt, die hierfür wechselweise betrieben werden. Eine Vergrößerung des Denitrifikationsanteils war nur auf höchstens 50% möglich. Mit zunehmendem Volumen des anoxischen Denitrifikationsbeckens am ganzen Belebungsbecken mußte daher das Schlammalter vergrößert werden.

Der Erfindung liegt die Aufgabe zugrunde, ein Verfahren zur Denitrifikation von Abwässern bereizustellen, das ohne aufwendige Denitrifikationsteile eine Stickstoffeliminierung bis auf einen Wert von 18 mg/Liter oder darunter ermöglicht, wobei vorhandene Anlagenteile verwendet und die Investitionskosten gesenkt bzw. bestehende Anlagen ohne großen Aufwand nachgerüstet werden können.

Die Erfindung beruht auf dem Gedanken, das nitrifizierte Wasser aus der Nachklärung in das Vorklärbecken zurückzuleiten und die Denitrifikation weitgehend im Vorklärbecken durchzuführen, das bisher nur die Funktion der mechanischen Schlammabscheidung hatte. Die Denitrifikation wird durch die Zurückführung des Überschußschlammes aus der biologischen Klärstufe gefördert.

Gegenstand der Erfindung ist somit ein Verfahren zur Denitrifikation von Abwässern in einer Kläranlage, enthaltend mindestens ein Vorklärbecken mit Zulauf, mindestens eine biologische Klärstufe und mindestens ein Nachklärbecken, das dadurch gekennzeichnet ist, daß man das nitrifizierte Abwasser aus dem Nachklärbecken bzw dessen zu- oder Ablauf zusammen mit dem Uberschußschlamm aus der biologischen Klärstufe und dem Schlammgemisch aus dem Vorklärbecken in den Zulauf zum Vorklärbecken zurückführt und das Vorklärbecken (2) die Doppelfunktion einer mechanischen Vorklärung und einer denitrifizierenden biologischen Reinigungsstufe hat.

Bei einer erfindungsgemäßen Ausführungsform wird als biologische Klärstufe (ein- oder zweistufig) ein Belebungsbecken verwendet. Es können jedoch auch anstelle oder zusammen mit dem (den) Belebungsbecken ein oder mehrere Tropfkörper verwendet werden. Bei einem Tropfkörper sind die Mikroorganismen auf der Oberfläche eines festen Trägermaterials angesiedelt. Das zu reinigende Abwasser wird dann beispielsweise in einem Turm durch eine Schüttung des bewachsenen Trägermaterials geleitet.

In ähnlicher Weise kann die biologische Klärstufe einen Biofilter aufweisen, auf dem die Mikroorganismen angesiedelt sind. Weiterhin können in der biologischen Klärstufe spezielle Ausführungen der vorgenannten Systeme, wie Rotationstropfkörper, Scheibentauchkörper und dergleichen verwendet werden. Diese und weitere Ausführungsformen von biologischen Klärstufen sind dem Fachmann auf diesem Gebiet geläufig.

So können auch sogenannte SBR-Reaktoren verwendet werden, die gleichzeitig die Funktion eines Belebungsbeckens und eines Nachklärbeckens erfüllen.

Weiterhin wird die biologische Klärstufe gemäß einer erfindungsgemäßen Ausführungsform als diskontinuierliches biologisches System betrieben, das zugleich die Funktion einer mechanischen Reinigung ausüben kann. Die biologische Stufe und das Nachklärbecken werden hierbei zusammengefaßt und sequentiell betrieben. Dabei wird der biologische Reaktor sequentiell einmal belüftet bzw. durchmischt und als biologisches System betrieben, und anschließend zur mechanischen Abtrennung der Mikroorganismen vom geklärten Abwasser durch Sedimentation verwendet.

Die Rückführmenge des nitrifizierten Abwassers aus der Nachklärung wird durch die zulässige hydraulische Belastung der Anlage bestimmt. Die Rückführmenge kann mit einer regelbaren Pumpe und einem Steuerkreis so eingestellt werden, daß die Summe aus Zulaufmenge und Rückführmenge einen Sollwert ergibt. Im Regenwetterfall wird die Rückführmenge vermindert, bis die hydraulische Kapazität der Anlage erreicht ist. Bei einer hydraulischen Kapazität von 100% erfolgt keine Rückführung mehr. Eine hydraulische Überlastung der Anlage bei Regenwetter ist damit nicht möglich.

Vorzugsweise beträgt die Rückführmenge des nitrifizierten Abwassers bei Trockenwetter mindestens etwa 50%, vorzugsweise mindestens etwa 100% der Zulaufmenge; besonders bevorzugt wird eine Rückführmenge von etwa 150 bis 400%.

Die Rückführmenge des Überschußschlammes aus der biologischen Klärstufe und des Schlammgemischs aus dem Vorklärbecken wird vorzugsweise so eingestellt, daß der Schlammspiegel im Vorklärbecken mindestens 10 cm bis maximal 100 cm, besonders bevorzugt etwa 40 bis 70 cm beträgt - abhängig vom jeweiligen Vorklärsystem (Längsbecken oder Rundbecken) sowie der entsprechenden Ausführung (Beckentiefe und Hydraulik). Bei einem höheren Schlammspiegel kann ein Abtrieb des Schlammes erfolgen. Die Obergrenze bestimmt sich also durch den Schlammabtrieb aus der Vorklärung. Die maximale Rückfuhrmenge bei Auslastung der hydraulischen Kapazität beträgt etwa 500%.

Im Vorklärbecken liegt also ein Schlammgemisch, bestehend aus Primärschlamm (Rohschlamm) und Überschußschlamm (Biomasse aus der biologischen Klärstufe) vor. Ein Teil dieses Schlammgemisches wird aus der Vorklärung wieder zum Zulauf der Vorklärung gefahren, so daß ein Schlammkreislauf entsteht, über den das notwendige Schlammalter gehalten werden kann.

Unter "Schlammalter" versteht man den Anteil der aktiven Biomasse im belebten Schlamm (bei Verwendung eines Belebungsbeckens als biologische Klärstufe) entsprechend der allgemeinen Formel

$$t_s = \frac{TS_{BB} \times V_{BB}}{Q_{\ddot{U}S} \times TS_{\ddot{U}S} + Q \times TS_e}$$

$t_s$ = Schlammalter in Tagen (d)

$TS_{BB}$ = Trockensubstanz-Gehalt in der Belebung (kg/m$^3$)

$V_{BB}$ = Volumen des Belebungsbeckens (m$^3$)

$Q_{\ddot{U}S}$ = abgezogene Überschuß-Schlamm-Menge (m$^3$)

$TS_{\ddot{U}S}$ = Trockensubstanzgehalt des Überschuß-Schlammes (kg/m$^3$)

$Q$ = abfließende Wassermenge (m$^3$)

$TS_e$ = Suspensagehalt (abfiltrierbare Stoffe) im Ablauf der Kläranlage (kg/m$^3$)

Der sonst übliche getrennte Schlammabzug von Primärschlamm aus dem Vorklärbecken und dem Überschußschlamm aus der biologischen Klärstufe erfolgt in Form eines Schlammgemischs aus dem Vorklärbecken.

Die Vorklärung hat also eine Doppelfunktion, und zwar eine mechanische Vorklärung und eine denitrifizierende biologische Reinigungsstufe.

Der Überschußschlamm aus der biologischen Klärstufe wird als Biomasse verwendet, während das Rohabwasser und der Primärschlamm als Kohlenstoff-Donator verwendet werden.

In der Regel wird eine vollständige Denitrifikation des zurückgeführten nitrathaltigen Wassers ereicht. Wird in der Vorklärstufe keine vollständige Denitrifikation erreicht, kann bei Belebungsanlagen durch eine sehr kleine vorgeschaltete Denitrifikationsstufe (Abtrennung von der biologischen Klärstufe) der Restnitratgehalt problemlos eliminiert werden.

Bei einer durchschnittlichen Rückführmenge des nitrifizierten Abwassers von 150% konnte eine Stickstoffeliminierung von 29,4 auf 9,4 mg/Liter (68%) erzielt werden, so daß die Mindestanforderung von 18 mg/Liter problemlos einzuhalten war.

Vorzugsweise wird das erfindungsgemäße Verfahren in der Weise durchgeführt, daß man das Gewichtsverhältnis zwischen Überschußschlamm aus der biologischen Klärstufe und Schlammgemisch aus dem Vorklärbecken auf etwa 90:10 bis 10:90, vorzugsweise auf etwa 30:70 bis 70:30, insbesondere auf etwa 50:50 einstellt.

Die Denitrifikation wird vorzugsweise mit aeroben kohlenhydratspaltenden, eiweißspaltenden und/oder fettspaltenden Mikroorganismen durchgeführt.

Vorzugsweise wird die Denitrifikation bei pH-Werten im Bereich von etwa 6,0 bis 10, insbesondere von etwa 7 bis 8, durchgeführt. Bei einem geringen $C/N$-Verhältnis, d.h. bei einem Kohlenstoffmangel kann im Zulaufbereich der biologischen Klärstufe bei Belebungsanlagen ein unbelüfteter Bereich als weitere Denitrifizierungsstufe vorgesehen werden. Ferner kann dieses Verhältnis durch Zufuhr einer externen C-Quelle erhöht werden. Das $C/N$-Verhältnis sollte nicht kleiner als 2:1, vorzugsweise nicht kleiner als 5:1 sein. Das $C/N$-Verhältnis wird gemessen als BSB5, bezogen auf $NO_3$-Stickstoff, der auf N umgerechnet wird.

Das Schlammalter beträgt gewöhnlich mindestens 24 Stunden; es setzt sich zusammen aus dem Trockensubstanzgehalt und der Wachstumsrate der C-abbauenden Mikroorganismen.

Je nach Art des in der biologischen Klärstufe eingesetzten Systems kann das nitrifizierte Abwasser vom Zulauf oder Ablauf der Nachklärung abgezogen und in die Vorklärung rückgeführt werden. Betreibt man die biologische Klärstufe (ein- oder zweistufig) mit Belebungsbecken (Belebtschlammverfahren), so wird das nitrifizierte (nitrathaltige) Wasser nach der mechanischen Trennung des Belebtschlammes vom nitrifizierten Abwasser im Ablauf der Nachklärung abgezogen. Wird ein Tropfkörpersystem als biologische Klärstufe (ein- oder zweistufig) verwendet, so kann der Abzug des nitrifizierten Abwassers-im Zulauf zum Nachklärbecken erfolgen, da im (in den) Tropfkörper(n) eine geringere Schlammenge anfällt und somit geringere Schlammengen mit zurückgeführt werden. Eine vorherige Sedimentation im Nachklärbecken ist daher unter Umständen nicht erforderlich.

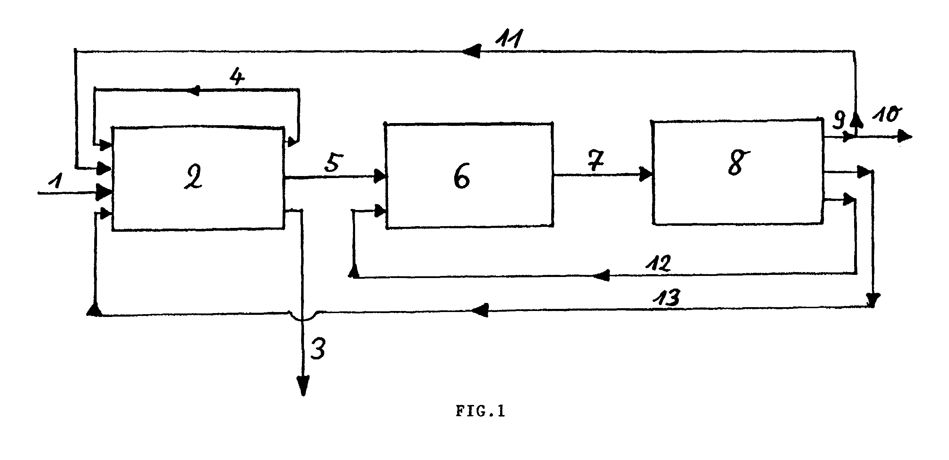

Die Erfindung ist nachstehend anhand der Zeichnung erläutert.

Bei dem angegebenen Ausführungsbeispiel wird das Abwasser in einer Menge 35.000 $m^3/d$ über den Abwasserzulauf 1 in das Vorklärbecken 2 eingeleitet. Das Abwasser enthält 100 $m^3/d$ Rohschlamm mit einer Trockenmassenkonzentration von 6%. In das Vorklärbecken 2 wird über die Leitung 11 nitrifiziertes Abwasser aus dem Nachklärbecken 8 in einer Menge von 52.500 $m^3/d$ in das Vorklärbecken 2 zurückgeleitet; das Rücklaufverhältnis beträgt 150%. Das nitrifizierte Abwasser hat einen pH-Wert von 8. Weiterhin wird durch die Leitung 13 Überschußschlamm (belebter Schlamm) aus dem Nachklärbecken 8 in einer Menge von 200 $m^3/d$ zurückgeleitet. Die Schlammkonzentration beträgt 3 %, bezogen auf die Trockenmasse, der pH-Wert beträgt 7,1. Am Ausgang des Vorklärbeckens 2 wird über die Leitung 4 ein Gemisch aus Rohschlamm und Überschußschlamm (jeweils 100 $m^3/d$) in einer Konzentration von 6% (bezogen auf Trockenmasse) zurückgeleitet. Das Schlammgemisch hat einen pH-Wert von 6,8. Das Vorklärbecken 2 wird unter anoxischen Bedingungen gefahren, wobei der Nitrat-Stickstoffgehalt des nitrathaltigen Abwassers von 15 mg/Liter auf <1 mg/Liter vermindert wird. Ein Teil des Schlammgemischs (200 $m^3/d$; pH-Wert 6,8) wird über die Leitung 3 abgezogen und kann nach weiterer Bearbeitung (Faulung, Entwässerung) als Klärschlamm landwirtschaftlich genutzt werden.

Das weitgehend denitrifizierte Abwasser wird über die Leitung 5 in das Belebungsbecken 6 geführt und mit dem darin enthaltenen Schlamm vermischt. In das Belebungsbecken wird Luft eingeleitet, so daß eine Nitrifikation erfolgt, wobei der Nitrat-Stickstoffgehalt von <1 mg/l auf 9,4 mg/l erhöht wird. Über die Leitung 7 fließt das Abwasser-Schlamm-Gemisch in das Nachklärbecken 8, in welchem eine Trennung in nitrathaltiges Abwasser und belebten Schlamm erfolgt. Der größere Teil (52.000 $m^3/d$) des nitrathaltigen Abwassers wird über die Leitungen 9 und 11 in das Vorklärbecken 2 zurückgeleitet. Ein kleinerer Teil (35.000 $m^3/d$, entspricht der Zulaufmenge) des nitrathaltigen Abwassers wird über die Leitung 10 in den Vorfluter abgeleitet.

Ein Teil des Rücklaufschlammes (6.500 $m^3/d$) wird über die Leitung 12 in das Belebungsbecken 6 zurückgeleitet, ein anderer Teil als Überschußschlamm über die Leitung 13 (200 $m^3/d$; pH-Wert 7,1) in das Vorklärbecken 2.

**Patentansprüche**

1. Verfahren zur Denitrifikation von Abwässern in einer Kläranlage, enthaltend mindestens ein Vorklärbecken (2) mit Zulauf, mindestens eine biologische Klärstufe (6) und mindestens ein Nachklärbecken (8), dadurch gekennzeichnet, daß man das nitrifizierte Abwasser aus dem Nachklärbecken (8) bzw. dessen Zu- oder Ablauf zusammen mit dem Überschußscblamm aus der biologischen Klärstufe (6) und dem Schlammgemisch aus dem Vorklärbecken (2) in den Zulauf zum Vorklärbecken xurückführt und das Vorklärbecken (2) die Doppelfunktion einer mechanischen Vorklärung und einer denitrifizierenden biologischen Reinigungsstufe hat.

2. Verfahren nach Anspruch 1, dadurch gekennzeichnet, daß als biologische Klärstufe ein Belebungsbecken verwendet wird.

3. Verfahren nach Anspruch 1 oder 2, dadurch gekennzeichnet, daß die biologische Klärstufe mindestens einen Tropfkörper, einen Rotationstropfkörper, einen Scheibentauchkörper und/oder einen Biofilter, gegebenenfalls zusammen mit mindestens einem Belebungsbecken aufweist.

4. Verfahren nach Anspruch 1, dadurch gekennzeichnet, daß als biologische Klärstufe ein SBR-Reaktor verwendet wird.

5. Verfahren nach Anspruch 1, dadurch gekennzeichnet, daß als biologische Klärstufe ein diskontinuierlich betriebenes biologisches System verwendet wird, das zugleich die Funktion einer mechanischen Reinigung (Nachklärbecken) ausüben kann.

6. Verfahren nach einem der Ansprüche 1 bis 5, dadurch gekennzeichnet, daß die Rückführmenge der nitrifizierten Abwässer mindestens etwa 50%, vorzugsweise mindestens etwa 100% der Zulaufmenge beträgt.

7. Verfahren nach einem der Ansprüche 1 bis 6, dadurch gekennzeichnet, daß man den Schlammspiegel im Vorklärbecken (2) auf etwa 10 bis 100 cm, vorzugsweise etwa 40 bis 70 cm (bezogen auf das Vorklärsystem) einstellt.

8. Verfahren nach einem der Ansprüche 1 bis 7, dadurch gekennzeichnet, daß man das Gewichtsverhältnis zwischen Überschußschlamm aus der biologischen Klärstufe (6) und Schlammgemisch aus dem Vorklärbecken (2) auf etwa 90:10 bis 10:90, vorzugsweise auf etwa 30:70 bis 70:30, insbesondere auf etwa 50:50, einstellt.

9. Verfahren nach einem der Ansprüche 1 bis 8, dadurch gekennzeichnet, daß man die Denitrifikation mit aeroben kohlenhydratspaltenden, eiweißspaltenden und/oder fettspaltenden Mikroorganismen durchführt.

10. Verfahren nach einem der Ansprüche 1 bis 9, dadurch gekennzeichnet, daß man die Denitrifikation bei pH-Werten im Bereich von etwa 6,0 bis 10, vorzugsweise von etwa 7 bis 8, durchführt.

11. Verfahren nach einem der Ansprüche 1 bis 10, dadurch gekennzeichnet, daß man bei einem geringen C/N-Verhältnis im Zulaufbereich der biologischen Klärstufe einen unbelüfteten Bereich als weitere Denitrifikationsstufe mit Zugabe einer externen Kohlenstoffquelle vorsieht.

**Claims**

1. A method of denitrifying waste water in a clarification plant, comprising at least one preliminary settling tank (2) with an inlet, at least one biological clarifying stage (6) and at least one final settling tank (8), characterised in that the nitrified waste water is recirculated from the final settling tank (8) or its inlet or outlet together with the excess sludge from the biological clarifying stage (6) and the sludge mixture from the preliminary settling tank into the inlet to the preliminary settling tank (2) and the preliminary settling tank (2) has the dual function of mechanical preliminary settling and of a denitrifying biological purification stage.

2. A method according to Claim 1, characterised in that an aeration tank is used as the biological clarifying stage.

3. A method according to Claim 1 or 2, characterised in that the biological clarifying stage has at least one trickling filter, a rotary trickling filter, a disc-type contact aerator and/or a biofilter, optionally together with at least one aeration tank.

4. A method according to Claim 1, characterised in that an SBR-reactor is used as the biological clarifying stage.

5. A method according to any one of Claims 1 to 4, characterised in that a discontinuously operated biological system is used as the biological clarifying stage, which system can simultaneously have the function of mechanical purification (final settling tank).

6. A method according to any one of Claims 1 to 5, characterised in that the recirculation volume of the nitrified waste water is at least approximately 50 %, preferably at least approximately 100 % of the inflow volume.

7. A method according to any one of Claims 1 to 6, characterised in that the sludge level in the preliminary settling tank (2) is adjusted to approximately 10 to 100 cm, preferably approximately 40 to 70 cm (in relation to the preliminary settling system).

8. A method according to any one of Claims 1 to 7, characterised in that the weight ratio between excess sludge from the biological clarifying stage (6) and sludge mixture from the preliminary settling tank (2) is adjusted to approximately 90:10 to 10:90, preferably to approximately 30:70 to 70:30, in particular to approximately 50:50.

9. A method according to any one of Claims 1 to 8, characterised in that the denitrification is carried out with aerobic carbohydrate-splitting, protein-splitting and/or fat-splitting micro-organisms.

10. A method according to any one of Claims 1 to 9, characterised in that the denitrification is carried out at pH values in the range of approximately 6.0 to 10, preferably of approximately 7 to 8.

11. A method according to any one of Claims 1 to 10, characterised in that with a low C/N ratio in the inlet region of the biological clarifying stage a non-aerated region is provided as a further denitrification stage with the addition of an external source of carbon.

**Revendications**

1. Procédé de dénitrification d'eaux résiduaires dans une installation d'épuration, contenant au moins un bassin de décantation primaire (2) avec alimentation, au moins un étage d'épuration biologique (6) et au moins un bassin de décantation secondaire (8), caractérisé en ce qu'on renvoie dans l'alimentation du bassin de décantation primaire les eaux résiduaires nitrifiées provenant du bassin de décantation secondaire (8) ou de son alimentation ou de son effluent, en même temps que les boues en excès provenant de l'étage d'épuration biologique (6) et le mélange de boues provenant du bassin de décantation primaire (2), et le bassin de décantation primaire (2) joue le double rôle d'une décantation primaire mécanique et d'un étage d'épuration biologique à effet de dénitrification.

2. Procédé selon la revendication 1, caractérisé en ce qu'on utilise comme étage de clarification biologique un bassin à boues activées.

3. Procédé selon la revendication 1 ou 2, caractérisé en ce que l'étage d'épuration biologique comprend au moins un lit bactérien, un lit bactérien tournant, un lit bactérien à disque et/ou un biofiltre, éventuellement en même temps qu'au moins un bassin à boues activées.

4. Procédé selon la revendication 1, caractérisé en ce qu'on utilise comme étage d'épuration biologique un réacteur SBR.

5. Procédé selon la revendication 1, caractérisé en ce qu'on utilise comme étage d'épuration biologique un système biologique à exploitation discontinue, qui simultanément peut jouer le rôle d'une épuration mécanique (bassin de décantation secondaire).

6. Procédé selon l'une des revendications 1 à 5, caractérisé en ce que le débit de retour des eaux résiduaires nitrifiées est d'au moins environ 50 %, de préférence d'au moins environ 100 % du débit d'alimentation.

7. Procédé selon l'une des revendications 1 à 6, caractérisé en ce qu'on ajuste le niveau des boues dans le bassin de décantation primaire (2) à environ 10 à 100 cm, de préférence à environ 40 à 70 cm (par rapport au système de décantation primaire).

8. Procédé selon l'une des revendications 1 à 7, caractérisé en ce qu'on ajuste le rapport pondéral entre la boue en excès provenant de l'étage d'épuration biologique (6) et le mélange de boues provenant du bassin de décantation primaire (2) à une valeur d'environ 90:10 à 10:90, de préférence d'environ 30:70 à 70:30, en particulier d'environ 50:50.

9. Procédé selon l'une des revendications 1 à 8, caractérisé en ce qu'on met en oeuvre la dénitrification avec des microorganismes aérobies qui dissocient les hydrates de carbone, les protéines et/ou les graisses.

10. Procédé selon l'une des revendications 1 à 9, caractérisé en ce qu'on met en oeuvre la dénitrification à des pH compris entre environ 6,0 et 10 et de préférence entre environ 7 et 8.

11. Procédé selon l'une des revendications 1 à 10, caractérisé en ce qu'on prévoit, pour un faible rapport C/N dans la zone d'alimentation de l'étage d'épuration biologique, une zone non aérée, comme étage supplémentaire de dénitrification, avec addition d'une source externe de carbone.

FIG.1